# EUROPÄISCHE PATENTSCHRIFT

(11) **EP 3 959 969 B1**
(45) Veröffentlichungstag und Bekanntmachung des Hinweises auf die Patenterteilung: **31.08.2022**
(21) Anmeldenummer: 21182062.6
(22) Anmeldetag: 28.06.2021
(51) Int. Cl.: A01K 5/00, A01F 29/06, A01D 90/12

(54) **VERTIKALMISCHSCHNECKE MIT MAGNET FÜR FUTTERMISCHWAGEN**
VERTICAL MIXING SCREW WITH MAGNET FOR A FEED MIXING WAGON
VIS MÉLANGEUSE VERTICALE À AIMANT POUR LE VÉHICULE MÉLANGEUR DE FOURRAGE

(30) Priorität: 28.08.2020 DE 202020104977 U
(43) Veröffentlichungstag der Anmeldung: 02.03.2022
(73) Patentinhaber: Mayer Verwaltungs GmbH & Co. KG, 84529 Tittmoning (DE)
(72) Erfinder: Felber, Johann, 83410 Laufen (DE)
(74) Vertreter: Flach Bauer Stahl Patentanwälte Partnerschaft mbB

(56) Entgegenhaltungen:
- EP-A1- 3 061 342
- EP-A2- 2 497 359
- DE-A1-102019 100 118
- IT-A1- UA20 163 044

## Beschreibung

Die Erfindung betrifft eine Vertikalmischschnecke für Futtermischwagen zum Mischen von Futtermittel gemäß dem Oberbegriff des Anspruchs 1.

In der Landwirtschaft ist es bekannt, zum Mischen von Futtermitteln wie Silage, Mais, Kraftfutter etc. Futtermischwagen zu verwenden, die mindestens eine um eine vertikale Drehachse drehbare Mischschnecke aufweisen.

Die Vertikalmischschnecken können einen Magneten aufweisen, welcher die Aufgabe hat, Metallteile, d. h. ferromagnetisches, ferrithaltiges oder teilferrithaltiges Material wie Stahlteile, Stahlspäne, Nägel, Reineisen oder Gusseisen aus dem zu mischenden Futtermittel abzuscheiden und durch die natürlich oder elektrisch erzeugte magnetische Wirkung festzuhalten, so dass eine Verletzung der Tiere durch im Futtermittel enthaltene Metallteile verhindert werden kann.

Bei der Positionierung der Magneten gibt es die Herausforderung, dass sie den Mischvorgang nicht stören sollen und gleichzeitig so eingebaut werden, dass das Abstreifen der Metallteile vom Magneten möglichst verhindert wird. Ferner soll das Futtermittel locker am Magneten vorbeigleiten, um einen möglichst hohen Abscheidegrad zu ermöglichen.

Bei bekannten Vertikalmischschnecken, bei denen die Magnete auf dem Schneckengewinde angeordnet sind, werden diese Kriterien häufig nicht im gewünschten Maß erfüllt. Durch die Anbringung der Magnete auf dem Schneckengewinde wird ferner der Abstand zum darüber liegenden Gewindegang verringert, so dass es zu Verstopfungen zwischen den Gewindegängen kommen kann.

Aus der EP 3061342 A1 ist eine Vertikalmischschnecke gemäß dem Oberbegriff des Anspruchs 1 bekannt, bei der ein Magnet in einer Aussparung des Schneckengewindes angeordnet ist.

Die EP 2497359 A2 zeigt eine Mischschnecke für Futtermischwagen, bei der ein Magnet im hinteren Bereich eines Zusatzflügels der Mischschnecke angeordnet ist.

Die DE 10 2019 100 118 A1 offenbart eine Mischschnecke mit einem magnetisch ausgebildeten Leitorgan, das zwischen einem Räumarm und einem Räummesser angeordnet ist.

Die IT UA20 163 044 A1 zeigt eine Mischschnecke mit Magneten an der Unterseite des Schneckenflügels.

Der Erfindung liegt die Aufgabe zugrunde, eine Vertikalmischschnecke gemäß dem Oberbegriff des Anspruchs 1 zu schaffen, mit der das Aussondern von Metallteilen aus dem zu mischenden Futtermittel während des Mischvorgangs auf besonders effektive Weise durchgeführt werden kann, ohne das Durchmischen des Futtermittels zu beeinträchtigen.

Diese Aufgabe wird erfindungsgemäß durch eine Vertikalmischschnecke mit den Merkmalen des Anspruchs 1 gelöst. Vorteilhafte Ausführungsformen der Erfindung sind in den weiteren Ansprüchen beschrieben.

Bei der erfindungsgemäßen Vertikalmischschnecke ist auf dem Schneckengewinde ein über das Schneckengewinde nach oben vorstehendes Rampenelement angeordnet. Der Magnet ist zumindest teilweise im Zwischenraum zwischen dem Schneckengewinde und dem Rampenelement oder in Umdrehungsrichtung der Vertikalmischschnecke gesehen hinter und angrenzend zum Rampenelement angeordnet, wobei der Magnet nach oben maximal so weit wie das Rampenelement über das Schneckengewinde übersteht.

Die erfindungsgemäße Vertikalmischschnecke bietet den Vorteil, dass Metallteile während des Mischens auf sehr effektive Weise aus dem Futtermittel entfernt werden können. Dieser Effekt kommt dadurch zustande, dass das Futtermittel durch das Rampenelement zunächst angehoben wird und anschließend hinter dem Rampenelement nach unten auf das Schneckengewinde fallen kann, wodurch das Futtermittel aufgelockert wird. Aus dem aufgelockerten Futtermittel können die Metallteile leichter als aus einem fest zusammengepressten Futtermittel entfernt werden.

Gemäß einer vorteilhaften Ausführungsform sind das Rampenelement und der Magnet zumindest überwiegend in einem radial äußeren Bereich des Schneckengewindes angeordnet, der nicht von einem darüber liegenden Gewindegang überdeckt ist. Hierdurch besteht keine Gefahr, dass eine Verstopfung zwischen den Gewindegängen auftritt, da das Futtermittel beim Überströmen des Rampenelements ohne weiteres nach oben ausweichen kann.

Vorteilhafterweise ist das Rampenelement in Umdrehungsrichtung der Mischschnecke gesehen hinter und benachbart zu einer Schürfleiste des Schneckengewindes angeordnet. Alternativ ist es jedoch auch möglich, das Rampenelement und damit den Magneten an beliebigen anderen Stellen des Schneckengewindes anzuordnen.

Vorteilhafterweise weisen das Rampenelement und der Magnet hintere Ränder auf, die parallel zur Gewindeanfangskante des Schneckengewindes angeordnet sind.

Gemäß einer vorteilhaften Ausführungsform besteht das Rampenelement aus einem vom Schneckengewinde aus schräg ansteigenden Plattenelement. Hierdurch bietet das Rampenelement beim Mischvorgang nur einen geringen Widerstand. Das schräg ansteigende Plattenelement kann sich dabei unmittelbar an eine Schürfleiste anschließen. Alternativ hierzu ist es jedoch auch möglich, dass sich das Rampenelement nach vorn über einen Schürfleistenbefestigungsabschnitt des Schneckengewindes hinaus erstreckt und eine Schürfleiste des Schneckengewindes bildet.

Gemäß einer vorteilhaften Ausführungsform weist die Vertikalmischschnecke einen Zusatzflügel auf, der in Drehrichtung versetzt zur Gewindeanfangskante des Schneckengewindes angeordnet ist und eine Zusatzflügelanfangskante aufweist, wobei auf dem Zusatzflügel ein zweites Rampenelement, das über den Zusatzflügel nach oben vorsteht, und ein zweiter Magnet befestigt sind, der zumindest teilweise zwischen dem Zusatzflügel und dem zweiten Rampenelement oder in Umdrehungsrichtung der Vertikalmischschnecke gesehen hinter und angrenzend an das zweite Rampenelement angeordnet ist, wobei der zweite Magnet nach oben maximal so weit wie das Rampenelement über den Zusatzflügel übersteht.

Das am Zusatzflügel angeordnete zweite Rampenelement und der diesem zugeordnete zweite Magnet können in gleicher Weise wie das vorstehend beschriebene, am Schneckengewinde angeordnete Rampenelement und der dortige Magnet ausgebildet und angeordnet sein. Demgemäß werden durch das zweite Rampenelement und den zweiten Magneten gleiche oder ähnliche Effekte und Vorteile erzielt.

Die Anzahl der Rampenelemente und Magnete kann auch mehr als zwei betragen.

Gemäß einer vorteilhaften Ausführungsform ist das Rampenelement und/oder der Magnet an einer verstellbaren Halterung befestigt, über welche der Winkel des Rampenelements und/oder Magneten relativ zum Schneckengewinde und damit die Steilheit des Rampenelements und/oder Magneten variabel einstellbar ist.

Gemäß einer vorteilhaften Ausführungsform ist das zweite Rampenelement und/oder der zweite Magnet an einer verstellbaren Halterung befestigt, über welche der Winkel des zweiten Rampenelements und/oder zweiten Magneten relativ zum Zusatzflügelbasisabschnitt und damit die Steilheit des zweiten Rampenelements und/oder zweiten Magneten variabel einstellbar ist.

Die Erfindung wird nachfolgend anhand der Zeichnungen beispielhaft näher erläutert. In diesen zeigen:
- Figur 1:: eine Ansicht schräg von oben auf eine erfindungsgemäße Vertikalmischschnecke,
- Figur 2:: einen Teilbereich der Vertikalmischschnecke mit Schürfleiste, Rampenelement und Magneten,
- Figur 3:: einen anderen Teilbereich der Vertikalmischschnecke, der einen Zusatzflügel mit einem zweiten Rampenelement und einem zweiten Magneten zeigt, und
- Figur 4:: eine zweite Ausführungsform eines Rampenelements mit Magneten.

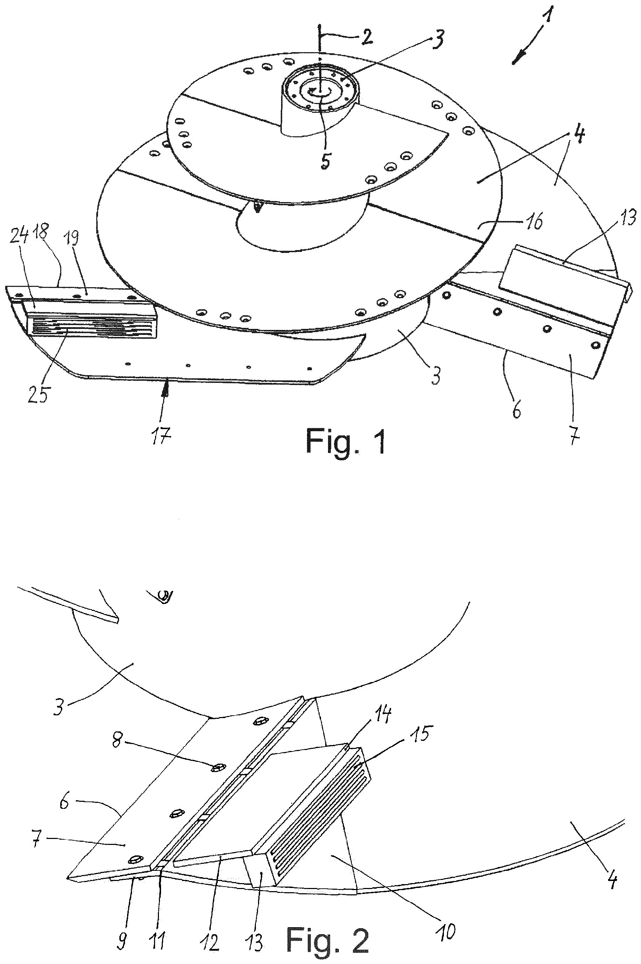

Figur 1 zeigt eine Vertikalmischschnecke 1 für Futtermischwagen zum Mischen von Futtermitteln.

Die Vertikalmischschnecke 1 umfasst eine um eine vertikale Drehachse 2 drehbare Schneckenwelle 3 und ein sich spiralförmig um die Schneckenwelle 3 herum erstreckendes Schneckengewinde 4. Der Durchmesser des Schneckengewindes 4 verringert sich vom unteren Anfang des Schneckengewindes 4 bis zu seinem oberen Ende, so dass ein unterer Gewindegang von einem darüber liegenden Gewindegang 16 nur teilweise überdeckt ist. Vorzugsweise ist nur maximal die radial innere Hälfte eines Gewindegangs vom darüber liegenden Gewindegang überdeckt.

Die Vertikalmischschnecke 1 ist über einen nicht dargestellten Antrieb, der mit dem unteren Ende der Vertikalmischschnecke 1 gekoppelt ist, drehbar, wobei die Drehrichtung mit dem Pfeil 5 gekennzeichnet ist.

Das Schneckengewinde 4 weist an seinem unteren Ende eine Gewindeanfangskante 6 auf, die an einer Schürfleiste 7 ausgebildet ist. Die Schürfleiste 7 ist mit mehreren Schrauben 8 an einem Schürfleistenbefestigungsabschnitt 9 des Schneckengewindes 4 austauschbar befestigt und weist vorzugsweise die gleiche Steigung wie der Schürfleistenbefestigungsabschnitt 9 auf. Der Schürfleistenbefestigungsabschnitt 9 hat eine größere Steigung als ein daran anschließender Basisabschnitt 10 des Schneckengewindes 4. Zwischen dem Schürfleistenbefestigungsabschnitt 9 und dem Basisabschnitt 10 ist somit ein Knick 11 vorhanden. Dieser verläuft vorzugsweise parallel zur Gewindeanfangskante 6.

Auf dem Basisabschnitt 10 des Schneckengewindes 4 ist ein Rampenelement 12 angeordnet, das eine Art Schanze für das darüber strömende Futtermittel während des Mischvorgangs bildet.

In dem in den Figuren 1 und 2 gezeigten Ausführungsbeispiel besteht das Rampenelement 12 aus einem vorzugsweise ebenen Plattenelement, das in Umdrehungsrichtung gesehen nahe hinter der Schürfleiste 7 und dem Knick 11 beginnt und dort auf dem Basisabschnitt 10 aufliegt. Das Rampenelement 12 hat vorzugsweise die gleiche Steigung wie die Schürfleiste 7 und ist insbesondere so angeordnet, dass die obere Fläche des Rampenelements 12 und die obere Fläche der Schürfleiste 7 in derselben schrägen Ebene liegen. Das Rampenelement 12 bildet somit zusammen mit dem Basisabschnitt 10 einen Keil, der sich nach hinten - in Umdrehungsrichtung gesehen - öffnet.

Im Rahmen der vorliegenden Erfindung beziehen sich die Angaben "hinten" und "vorn" auf die Drehrichtung der Vertikalmischschnecke 1.

Im hinteren Endbereich des Rampenelement 12 ist ein Magnet 13 zum Aussondern von Eisenteilen aus dem Futtermittel vorgesehen. Der Magnet 13 ist weitgehend im Zwischenraum zwischen dem Basisabschnitt 10 und dem hinteren Ende des Rampenelements 12 angeordnet, so dass er nach oben nicht über das Rampenelement 12 vorsteht.

Im gezeigten Ausführungsbeispiel steht der Magnet 13 nach hinten etwas über einen hinteren Rand 14 des Rampenelements 12 vor. Es ist jedoch ohne weiteres möglich, dass der Magnet 13 vom Rampenelement 12 vollständig überdeckt ist, so dass das Rampenelement 12 gleichzeitig ein oberes Schutzblech für den Magneten 13 bildet. Weiterhin ist es auch möglich, dass der Magnet 13 hinter und angrenzend an das Rampenelement 12 derart angeordnet ist, dass er das Rampenelement 12 nach hinten verlängert.

Der Magnet 13 ist länglich ausgebildet und weist einen hinteren Rand 15 auf, der parallel zum hinteren Rand 14 des Rampenelements 12 angeordnet ist. Die hinteren Ränder 14,15 und die Längsachse des Magneten 13 erstrecken sich dabei vorzugsweise auch parallel zur Gewindeanfangskante 6.

Das Rampenelement 12 und der Magnet 13 erstrecken sich vom äußeren Rand des Schneckengewindes 4 nur über einen Teil der Breite des Schneckengewindes, insbesondere lediglich über denjenigen Teil, der nicht von einem darüber liegenden Gewindegang 16 überdeckt ist. Hierdurch können Verstopfungen des Futtermittels während des Mischvorgangs vermieden werden.

Der Magnet 13 kann lösbar in einer nicht dargestellten Führung, insbesondere Schiebeführung, gehaltert sein, die am Schneckengewinde 4 oder am Rampenelement 12 angeordnet ist. Beispielsweise kann die Führung derart ausgebildet sein, dass der Magnet 13 von der Seite der Vertikalmischschnecke 1 her in die Führung eingeschoben werden kann. Hierdurch ist das Einsetzen und der Austausch des Magneten 13 auf besonders einfache Weise möglich.

Der Magnet 13 kann ein Dauermagnet oder ein Elektromagnet sein.

Wie aus Figur 1 weiter ersichtlich, weist die Vertikalmischschnecke 1 im dargestellten Ausführungsbeispiel einen Zusatzflügel 17 auf, der in Umfangsrichtung bzw. Drehrichtung der Vertikalmischschnecke 1 versetzt zur Schürfleiste 7 bzw. zur Gewindeanfangskante 6 des Schneckengewindes 4 angeordnet ist. Ein derartiger Zusatzflügel 17 verbessert das Mischergebnis und unterstützt das Ausbringen des Futtermittels aus dem Futtermischwagen.

Der Zusatzflügel 17 weist eine vordere Zusatzflügelanfangskante 18 auf, die an einer zweiten Schürfleiste 19 ausgebildet ist. Die zweite Schürfleiste 19 ist mit mehreren Schrauben 20 an einem zweiten Schürfleistenbefestigungsabschnitt 21 des Zusatzflügels 17 austauschbar befestigt und weist vorzugsweise die gleiche Steigung wie dieser auf.

Der zweite Schürfleistenbefestigungsabschnitt 21 hat eine größere Steigung als ein daran anschließender Zusatzflügelbasisabschnitt 22. Zwischen dem zweiten Schürfleistenbefestigungsabschnitt 21 und dem Zusatzflügelbasisabschnitt 22 ist somit ein zweiter Knick 23 vorhanden. Dieser verläuft vorzugsweise parallel zur Zusatzflügelanfangskante 18.

Auf dem Zusatzflügelbasisabschnitt 22 sind ein zweites Rampenelement 24 und ein zweiter Magnet 25 angeordnet, die in gleicher Weise ausgebildet und angeordnet sein können wie das Rampenelement 12 bzw. der Magnet 13 auf dem Schneckengewinde 4.

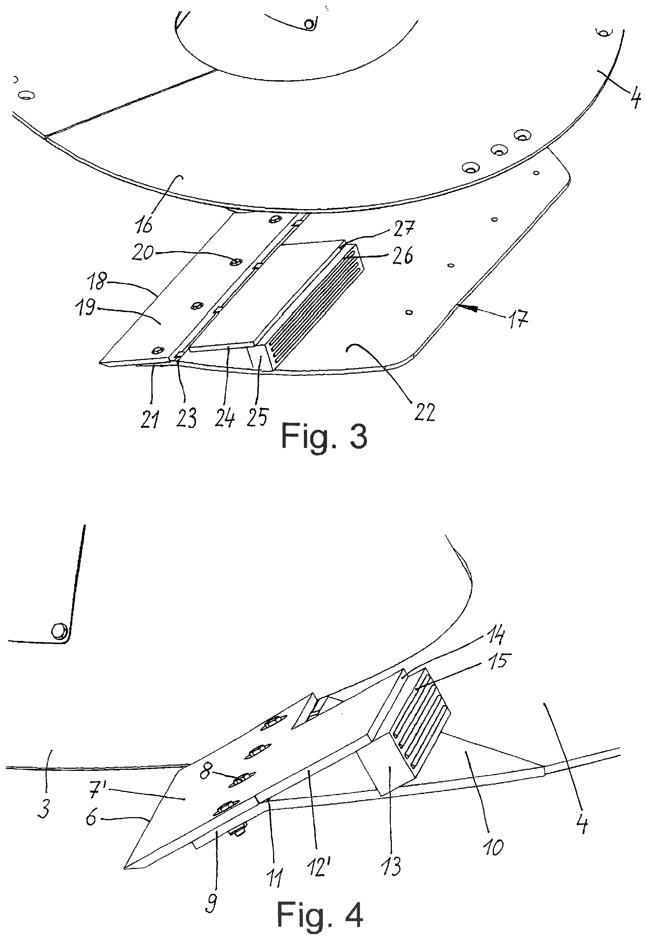

Demgemäß besteht das zweite Rampenelement 24 bei dem in den Figuren 1 und 3 gezeigten Ausführungsbeispiel aus einem vorzugsweise ebenen Plattenelement, das in Umdrehungsrichtung gesehen nahe hinter der zweiten Schürfleiste 19 und dem zweiten Knick 23 beginnt und dort auf dem Zusatzflügelbasisabschnitt 22 aufliegt. Das zweite Rampenelement 24 hat vorzugsweise die gleiche Steigung wie die zweite Schürfleiste 19 und ist insbesondere so angeordnet, dass die obere Fläche des zweiten Rampenelements 24 und die obere Fläche der zweiten Schürfleiste 19 in derselben schrägen Ebene liegen. Das zweite Rampenelement 24 bildet somit zusammen mit dem darunterliegenden Bereich des Zusatzflügelbasisabschnitts 22 einen Keil, der sich nach hinten - in Umdrehungsrichtung gesehen - öffnet.

Der zweite Magnet 25 unterstützt das Aussondern von Eisenteilen aus dem Futtermittel und ist im hinteren Endbereich des zweiten Rampenelements 24 angeordnet. Der zweite Magnet 25 ist weitgehend im Zwischenraum zwischen dem Zusatzflügelbasisabschnitt 22 und dem hinteren Ende des zweiten Rampenelements 24 angeordnet, so dass er nach oben nicht über das zweite Rampenelement 24 vorsteht.

Im gezeigten Ausführungsbeispiel steht der zweite Magnet 25 nach hinten etwas über das zweite Rampenelement 24 vor. Es ist jedoch auch ohne weiteres möglich, dass der zweite Magnet 25 vom zweiten Rampenelement 24 vollständig überdeckt ist, so dass das zweite Rampenelement 24 gleichzeitig ein oberes Schutzblech für den zweiten Magneten 24 bildet. Weiterhin ist es auch möglich, dass der zweite Magnet 25 hinter und angrenzend an das zweite Rampenelement 24 derart angeordnet ist, dass er das zweite Rampenelement 24 nach hinten verlängert.

Der zweite Magnet 25 ist länglich ausgebildet und weist einen hinteren Rand 26 auf, der parallel zu einem hinteren Rand 27 des zweiten Rampenelements 24 angeordnet ist. Die hinteren Ränder 26, 27 und die Längsachse des zweiten Magneten 25 erstrecken sich dabei auch parallel zur Zusatzflügelanfangskante 18.

Das zweite Rampenelement 24 und der zweite Magnet 25 erstrecken sich vom radial äußeren Rand des Zusatzflügels 17 nur über einen Teil der Breite des Zusatzflügels 17, insbesondere lediglich über denjenigen Teil, der nicht von dem darüber liegenden Gewindegang 16 überdeckt ist. Hierdurch können Verstopfungen des Futtermittels während des Mischvorgangs vermieden werden.

Figur 4 zeigt eine zweite Ausführungsform eines Rampenelements 12', das auf dem Schneckengewinde 4 befestigt werden kann. Der Unterschied zu dem in den Figuren 1 und 2 gezeigten Rampenelement 12 besteht darin, dass das Rampenelement 12' selbst die Schürfleiste des Schneckengewindes 4 bildet. Zu diesem Zweck erstreckt sich das Rampenelement 12' nach vorn über den Schürfleistenbefestigungsabschnitt 9 des Schneckengewindes 4 hinaus. Anders ausgedrückt, erstreckt sich bei dieser Ausführungsform die Schürfleiste von der Gewindeanfangskante 6 aus in Form eines vorzugsweise ebenen Plattenelements über den Schürfleistenbefestigungsabschnitt 9 hinaus nach hinten, um eine Art Schanze zu bilden, welche das Futtermittel beim Mischvorgang über den Magneten 13 führt.

Die übrige Ausbildung des Schneckengewindes 4 und des Magneten 13 der zweiten Ausführungsform kann gleich oder ähnlich sein wie bei der Ausführungsform der Figuren 1 und 2.

Weiterhin ist es auch möglich, dass das am Zusatzflügel 17 angeordnete zweite Rampenelement in gleicher Weise wie das Rampenelement 12' ausgebildet ist.

Im Rahmen der Erfindung sind eine Vielzahl von Variationen möglich. Beispielsweise kann anstelle eines schräg ansteigenden Rampenelements 12, 24, wie anhand der Figuren 1-4 gezeigt, auch ein Rampenelement in der Form eines Leistenelements verwendet werden, das sich vom Basisabschnitt 10 des Schneckengewindes 4 oder vom Zusatzflügelbasisabschnitt 22 des Zusatzflügels 17 senkrecht oder in einem Winkel nach oben erstreckt, der zwischen 60° und 90° zur Ebene des Basisabschnitts 10 bzw. des Zusatzflügelbasisabschnitts 22 nach hinten geneigt ist. Die Längsachse eines derartigen Leistenelements kann dabei insbesondere parallel zur Gewindeanfangskante 6 bzw. Zusatzflügelanfangskante 18 angeordnet sein. Es ist jedoch auch möglich, ein derartiges Leistenelement schräg auf dem Schneckengewinde 4 bzw. Zusatzflügel 17 anzuordnen, um das Futtermittel beim Mischvorgang entsprechend zu führen.

Am Rampenelement 12, 12', 24 des Zusatzflügels 17 kann ein radial nach außen vorstehendes, nicht dargestelltes Schneidmesser befestigt sein.

Das Rampenelement 12, 12', 24 kann mit dem Schneckengewinde 4 verschweißt oder verschraubt sein. Zweckmäßigerweise besteht das Rampenelement 12, 12', 24 aus Stahl oder einem verschleißfesten Kunststoff.

Der Magnet 13, 25 ist zweckmäßigerweise derart ausgerichtet, dass er zur Mitte der Vertikalmischschnecke 1 zeigt. Es ist jedoch auch möglich, den Magneten 13, 25 in einem anderen Winkel zu positionieren.

## Patentansprüche

1. Vertikalmischschnecke für Futtermischwagen zum Mischen von Futtermittel, umfassend:
- eine um eine vertikale Drehachse drehbare Schneckenwelle (3),
- ein sich spiralförmig um die Schneckenwelle (3) herum erstreckendes Schneckengewinde (4), das eine Gewindeanfangskante (6) aufweist,
- mindestens einen Magneten (13) zum Abscheiden von Metallteilen aus dem Futtermittel während des Mischvorgangs,
**dadurch gekennzeichnet, dass** auf dem Schneckengewinde (4) ein über das Schneckengewinde (4) nach oben vorstehendes Rampenelement (12, 12') angeordnet ist, und dass der Magnet (13) zumindest teilweise im Zwischenraum zwischen dem Schneckengewinde (4) und dem Rampenelement (12, 12') oder in Umdrehungsrichtung der Vertikalmischschnecke gesehen hinter und angrenzend an das Rampenelement (12, 12') angeordnet ist, wobei der Magnet (13) nach oben maximal so weit wie das Rampenelement (12, 12') über das Schneckengewinde (4) übersteht.

2. Vertikalmischschnecke nach Anspruch 1, **dadurch gekennzeichnet, dass** das Rampenelement (12, 12') und der Magnet (13) zumindest überwiegend in einem radial äußeren Bereich des Schneckengewindes (4) angeordnet sind, der nicht von einem darüber liegenden Gewindegang (16) überdeckt ist.

3. Vertikalmischschnecke nach einem der vorhergehenden Ansprüche, **dadurch gekennzeichnet, dass** das Rampenelement (12) in Umdrehungsrichtung der Vertikalmischschnecke (1) gesehen hinter und benachbart zu einer Schürfleiste (7) des Schneckengewindes (4) angeordnet ist.

4. Vertikalmischschnecke nach einem der vorhergehenden Ansprüche, **dadurch gekennzeichnet, dass** das Rampenelement (12, 12') und der Magnet (13) hintere Ränder (14, 15) aufweisen, die parallel zur Gewindeanfangskante (6) des Schneckengewindes (4) angeordnet sind.

5. Vertikalmischschnecke nach einem der vorhergehenden Ansprüche, **dadurch gekennzeichnet, dass** das Rampenelement (12, 12') aus einem vom Schneckengewinde (4) aus schräg ansteigenden Plattenelement besteht.

6. Vertikalmischschnecke nach einem der vorhergehenden Ansprüche, **dadurch gekennzeichnet, dass** sich das Rampenelement (12') nach vorn über einen Schürfleistenbefestigungsabschnitt (9) des Schneckengewindes (4) hinaus erstreckt und eine Schürfleiste (7') des Schneckengewindes (4) bildet.

7. Vertikalmischschnecke nach einem der vorhergehenden Ansprüche, **dadurch gekennzeichnet, dass** die Vertikalmischschnecke (1) einen Zusatzflügel (17) aufweist, der in Drehrichtung versetzt zur Gewindeanfangskante (6) des Schneckengewindes (4) angeordnet ist und eine Zusatzflügelanfangskante (18) aufweist, wobei auf dem Zusatzflügel (17) ein zweites Rampenelement (24), das über den Zusatzflügel (17) nach oben vorsteht, und ein zweiter Magnet (25) befestigt sind, der zumindest teilweise zwischen dem Zusatzflügel (17) und dem zweiten Rampenelement (24) oder in Umdrehungsrichtung der Vertikalmischschnecke (1) gesehen hinter und angrenzend an das zweite Rampenelement (24) angeordnet ist, wobei der zweite Magnet (25) nach oben maximal so weit wie das zweite Rampenelement (24) über den Zusatzflügel (17) übersteht.

8. Vertikalmischschnecke nach Anspruch 7, **dadurch gekennzeichnet, dass** das zweite Rampenelement (24) und der zweite Magnet (25) zumindest überwiegend im radial äußeren Bereich des Zusatzflügels (17) angeordnet sind.

9. Vertikalmischschnecke nach Anspruch 7 oder 8, **dadurch gekennzeichnet, dass** das zweite Rampenelement (24) in Umdrehungsrichtung der Vertikalmischschnecke (1) gesehen hinter und benachbart zu einer Schürfleiste (19) des Zusatzflügels (17) angeordnet ist.

10. Vertikalmischschnecke nach einem der Ansprüche 7 bis 9, **dadurch gekennzeichnet, dass** das zweite Rampenelement (24) aus einem vom Zusatzflügel (17) aus schräg ansteigenden zweiten Plattenelement besteht.

11. Vertikalmischschnecke nach einem der Ansprüche 7 bis 10, **dadurch gekennzeichnet, dass** sich das zweite Rampenelement (24) nach vorn über einen zweiten Schürfleistenbefestigungsabschnitt (21) des Zusatzflügels (17) hinaus erstreckt und eine Schürfleiste (7') des Zusatzflügels (17) bildet.

12. Vertikalmischschnecke nach einem der vorhergehenden Ansprüche, **dadurch gekennzeichnet, dass** der Magnet (13) und/oder zweite Magnet (25) lösbar in einer Schiebeführung gehaltert ist, die am Schneckengewinde (4), am Rampenelement (12), am zweiten Rampenelement (24) und/oder am Zusatzflügel (17) angeordnet ist.

13. Vertikalmischschnecke nach einem der vorhergehenden Ansprüche, **dadurch gekennzeichnet, dass** am Rampenelement (12) und/oder zweiten Rampenelement (24) ein Schneidmesser befestigt ist.

14. Vertikalmischschnecke nach einem der vorhergehenden Ansprüche, **dadurch gekennzeichnet, dass** der Magnet (13) und/oder zweite Magnet (25) zumindest teilweise von einem Schutzblech überdeckt ist.

15. Vertikalmischschnecke nach einem der vorhergehenden Ansprüche, **dadurch gekennzeichnet, dass** das Rampenelement (12, 12') und/oder der Magnet (13) an einer verstellbaren Halterung befestigt ist/sind, über welche der Winkel des Rampenelements (12, 12') und/oder Magneten (13) relativ zum Schneckengewinde (4) und damit die Steilheit des Rampenelements (12, 12') und/oder Magneten (13) variabel einstellbar ist.

16. Vertikalmischschnecke nach einem der Ansprüche 7 bis 15, **dadurch gekennzeichnet, dass** das zweite Rampenelement (24) und/oder der zweite Magnet (25) an einer verstellbaren Halterung befestigt ist/sind, über welche der Winkel des zweiten Rampenelements (24) und/oder zweiten Magneten (25) relativ zum Zusatzflügelbasisabschnitt (22) und damit die Steilheit des zweiten Rampenelements (24) und/oder zweiten Magneten (25) variabel einstellbar ist.

## Claims

1. Vertical mixing screw for fodder mixing vehicles for mixing fodder, comprising:
- a screw shaft (3) that can be rotated around a vertical axis of rotation,
- a screw thread (4) extending in a spiral around the screw shaft (3), said screw thread having a thread starting edge (6),
- at least one magnet (13) for separating metal parts from the fodder during the mixing process,
**characterised in that** a ramp element (12, 12') protruding upwardly beyond the screw thread (4) is arranged on the screw thread (4), and the magnet (13) is arranged at least partially in the intermediary space between the screw thread (4) and the ramp element (12, 12') or, when seen in the revolution direction of the vertical mixing screw, behind and adjacent to the ramp element (12, 12'), wherein the magnet (13) projects upwardly beyond the screw thread (4) to a maximum as far as the ramp element (12, 12').

2. Vertical mixing screw according to claim 1, **characterised in that** the ramp element (12, 12') and the magnet (13) are arranged at least extensively in a radially outer region of the screw thread (4) which is not covered by a thread pitch (16) lying above it.

3. Vertical mixing screw according to one of the preceding claims, **characterised in that** the ramp element (12) is arranged, when seen in the revolution direction of the vertical mixing screw (1), behind and adjacent to a digging ledge (7) of the screw thread (4).

4. Vertical mixing screw according to one of the preceding claims, **characterised in that** the ramp element (12, 12') and the magnet (13) have rear edges (14, 15), which are arranged in parallel to the thread starting edge (6) of the screw thread (4).

5. Vertical mixing screw according to one of the preceding claims, **characterised in that** the ramp element (12, 12') consists of a plate element rising obliquely from the screw thread (4).

6. Vertical mixing screw according to one of the preceding claims, **characterised in that** the ramp element (12') extends forwards beyond a digging edge fixing portion (9) of the screw thread (4) and forms a digging ledge (7') of the screw thread (4).

7. Vertical mixing screw according to one of the preceding claims, **characterised in that** the vertical mixing screw (1) has an additional wing (17) which is arranged to be offset in the rotational direction in relation to the thread starting edge (6) of the screw thread (4) and has an additional wing starting edge (18), wherein a second ramp element (24), which protrudes upwards beyond the additional wing (17), and a second magnet (25) are fixed on the additional wing (17), said magnet being arranged at least partially between the additional wing (17) and the second ramp element (24) or, when seen in the revolution direction of the vertical mixing screw (1), being arranged behind and adjacent to the second ramp element (24), wherein the second magnet (25) projects upwards beyond the additional wing (17) to a maximum as far as the second ramp element (24).

8. Vertical mixing screw according to claim 7, **characterised in that** the second ramp element (24) and the second magnet (25) are arranged at least extensively in the radially outer region of the additional wing (17).

9. Vertical mixing screw according to claim 7 or 8, **characterised in that** the second ramp element (24) is arranged, when seen in the revolution direction of the vertical mixing screw (1), behind or adjacent to a digging ledge (19) of the additional wing (17).

10. Vertical mixing screw according to one of claims 7 to 9, **characterised in that** the second ramp element (24) consists of a second plate element rising obliquely from the additional wing (17).

11. Vertical mixing screw according to one of claims 7 to 10, **characterised in that** the second ramp element (24) extends forwards beyond a second digging ledge fixing portion (21) of the additional wing (17) and forms a digging ledge (7') of the additional wing (17).

12. Vertical mixing screw according to one of the preceding claims, **characterised in that** the magnet (13) and/or second magnet (25) is mounted releasably in a shifting guide, which is arranged on the screw thread (4), on the ramp element (12), on the second ramp element (24) and/or on the additional wing (17).

13. Vertical mixing screw according to one of the preceding claims, **characterised in that** a cutting blade is fixed on the ramp element (12) and/or second ramp element (24).

14. Vertical mixing screw according to one of the preceding claims, **characterised in that** the magnet (13) and/or second magnet (25) is covered at least partially by a protective sheet.

15. Vertical mixing screw according to one of the preceding claims, **characterised in that** the ramp element (12, 12') and/or the magnet (13) is/are fixed on an adjustable bracket, via which the angle of the ramp element (12, 12') and/or magnet (13) can be set variably in relation to the screw thread (4) and thus the rigidity of the ramp element (12, 12') and/or magnet (13).

16. Vertical mixing screw according to one of claims 7 to 15, **characterised in that** the second ramp element (24) and/or the second magnet (25) is/are fixed on an adjustable bracket, via which the angle of the second ramp element (24) and/or second magnet (25) can be set variably in relation to the additional wing base portion (22) and thus the rigidity of the second ramp element (24) and/or second magnet (25).

## Revendications

1. Vis de mélange verticale pour mélangeuse à vis, destinée au mélange du fourrage, comprenant :
- un axe d'hélice (3) rotatif sur un axe de rotation vertical,
- une hélice (4) enveloppant en spirale le pourtour de l'axe d'hélice (3) et présentant un bord d'attaque (6),
- au moins un aimant (13) destiné à séparer les éléments métalliques du fourrage au cours du processus de mélange,
**caractérisée en ce qu'**un élément formant rampe (12, 12') est disposé sur l'hélice (4) en faisant saillie vers le haut sur le dessus de l'hélice (4), et **en ce que** l'aimant (13) est agencé au moins en partie dans l'espace situé entre l'hélice (4) et l'élément formant rampe (12, 12') ou bien, vu dans le sens de rotation de la vis de mélange verticale, derrière ledit élément formant rampe (12, 12') et de façon contiguë à celui-ci, ledit aimant (13) culminant tout au plus autant que s'élève l'élément formant rampe (12, 12') au-dessus de l'hélice (4).

2. Vis de mélange verticale selon la revendication 1, **caractérisée en ce que** l'élément formant rampe (12, 12') et l'aimant (13) sont agencés au moins majoritairement dans une zone radialement extérieure de l'hélice (4), non recouverte par une spire (16) supérieure.

3. Vis de mélange verticale selon l'une des revendications précédentes, **caractérisée en ce que** l'élément formant rampe (12) est agencé, vu dans le sens de rotation de la vis de mélange verticale (1), derrière une lame d'usure (7) de l'hélice (4) et de façon contiguë à celle-ci.

4. Vis de mélange verticale selon l'une des revendications précédentes, **caractérisée en ce que** l'élément formant rampe (12, 12') et l'aimant (13) présentent des bords arrière (14, 15) parallèles au bord d'attaque (6) de l'hélice (4).

5. Vis de mélange verticale selon l'une des revendications précédentes, **caractérisée en ce que** l'élément formant rampe (12, 12') se compose d'un élément en forme de plaque s'élevant à l'oblique à partir de l'hélice (4).

6. Vis de mélange verticale selon l'une des revendications précédentes, **caractérisée en ce que** l'élément formant rampe (12') s'étend vers l'avant au-delà d'une section de fixation de lame d'usure (9) de l'hélice (4) et forme une lame d'usure (7') de l'hélice (4).

7. Vis de mélange verticale selon l'une des revendications précédentes, **caractérisée en ce que** la vis de mélange verticale (1) présente une ailette supplémentaire (17) agencée décalée, dans le sens de la rotation, par rapport au bord d'attaque (6) de l'hélice (4) et présentant elle-même un bord d'attaque (18) ; un deuxième élément formant rampe (24) en saillie vers le haut au-dessus de l'ailette supplémentaire (17) ainsi qu'un deuxième aimant (25) étant fixés sur ladite ailette supplémentaire (17), lequel deuxième aimant est agencé au moins en partie entre l'ailette supplémentaire (17) et le deuxième élément formant rampe (24) ou bien, vu dans le sens de rotation de la vis de mélange verticale (1), derrière le deuxième élément formant rampe (24) et de manière contiguë à ce dernier, ledit deuxième aimant (25) culminant tout au plus autant que s'élève le deuxième élément formant rampe (24) au-dessus de l'ailette supplémentaire (17).

8. Vis de mélange verticale selon la revendication 7, **caractérisée en ce que** le deuxième élément formant rampe (24) et le deuxième aimant (25) sont agencés au moins majoritairement dans la zone radialement extérieure de l'ailette supplémentaire (17).

9. Vis de mélange verticale selon la revendication 7 ou 8, **caractérisée en ce que** le deuxième élément formant rampe (24), vu dans le sens de rotation de la vis de mélange verticale (1), est agencé derrière une lame d'usure (19) de l'ailette supplémentaire (17) et de façon contiguë à celle-ci.

10. Vis de mélange verticale selon l'une des revendications 7 à 9, **caractérisée en ce que** le deuxième élément formant rampe (24) se compose d'un deuxième élément en forme de plaque s'élevant à l'oblique à partir de l'ailette supplémentaire (17).

11. Vis de mélange verticale selon l'une des revendications 7 à 10, **caractérisée en ce que** le deuxième élément formant rampe (24) s'étend vers l'avant au-delà d'une deuxième section de fixation de lame d'usure (21) de l'ailette supplémentaire (17) et forme une lame d'usure (7') de l'ailette supplémentaire (17).

12. Vis de mélange verticale selon l'une des revendications précédentes, **caractérisée en ce que** l'aimant (13) et/ou le deuxième aimant (25) sont retenus amovibles dans une glissière agencée sur l'hélice (4), sur l'élément formant rampe (12), sur le deuxième élément formant rampe (24) et/ou sur l'ailette supplémentaire (17).

13. Vis de mélange verticale selon l'une des revendications précédentes, **caractérisée en ce qu'**une lame coupante est fixée sur l'élément formant rampe (12) et/ou sur le deuxième élément formant rampe (24).

14. Vis de mélange verticale selon l'une des revendications précédentes, **caractérisée en ce que** l'aimant (13) et/ou le deuxième aimant (25) sont recouverts au moins en partie par une plaque de protection.

15. Vis de mélange verticale selon l'une des revendications précédentes, **caractérisée en ce que** l'élément formant rampe (12, 12') et/ou l'aimant (13) sont fixés sur un organe de retenue réglable permettant d'ajuster l'angle de l'élément formant rampe (12, 12') et/ou de l'aimant (13) par rapport à l'hélice (4) et ainsi le degré d'inclinaison de l'élément formant rampe (12, 12') et/ou de l'aimant (13) de manière variable.

16. Vis de mélange verticale selon l'une des revendications 7 à 15, **caractérisée en ce que** le deuxième élément formant rampe (24) et/ou le deuxième aimant (25) sont fixés sur un organe de retenue réglable permettant d'ajuster l'angle du deuxième élément formant rampe (24) et/ou du deuxième aimant (25) par rapport à la section de base (22) de l'ailette supplémentaire et ainsi le degré d'inclinaison du deuxième élément formant rampe (24) et/ou du deuxième aimant (25) de manière variable.
